Europäisches Patentamt

European Patent Office

Office européen des brevets

(19)

(11) **EP 0 804 824 B1**

(12) **EUROPEAN PATENT SPECIFICATION**

(45) Date of publication and mention
of the grant of the patent:
**23.09.1998 Bulletin 1998/39**

(21) Application number: **96900385.4**

(22) Date of filing: **18.01.1996**

(51) Int Cl.[6]: **H01S 3/00**, G02F 1/21

(86) International application number:
**PCT/GB96/00104**

(87) International publication number:
**WO 96/22623 (25.07.1996 Gazette 1996/34)**

(54) **FREQUENCY COMB GENERATORS**

**FREQUENZKAMMGENERATOR**

**GENERATEURS DE SPECTRES EN PEIGNE**

(84) Designated Contracting States:
**DE GB**

(30) Priority: **18.01.1995 GB 9500971**

(43) Date of publication of application:
**05.11.1997 Bulletin 1997/45**

(73) Proprietor: **University of Strathclyde
Glasgow G1 1YQ, Scotland (GB)**

(72) Inventors:
• **BELL, Angus, Sutherland
Lanarkshire ML7 5BU (GB)**
• **MACFARLANE, Graham, Munn
Ayrshire KA3 1TS (GB)**
• **RIIS, Erling
Blanefield G63 9DB (GB)**

(74) Representative:
**MacDougall, Donald Carmichael et al
Cruikshank & Fairweather
19 Royal Exchange Square
Glasgow G1 3AE, Scotland (GB)**

(56) References cited:
• **APPLIED PHYSICS LETTERS, vol. 21, no. 8, 15
October 1972, NEW YORK US, pages 341-343,
XP002001844 T.KOBAYASHI ET AL.: "High
repetition-rate optical pulse generator using a
Fabry-Perot electro-optic modulator"**
• **OPTICS LETTERS, vol. 19, no. 4, 15 February
1994, pages 245-247, XP000429253 BROTHERS
L R ET AL: "TERAHERTZ OPTICAL FREQUENCY
COMB GENERATION AND PHASE LOCKING OF
AN OPTICAL PARAMETRIC OSCILLATOR AT
665 GHZ" cited in the application**
• **OPTICS LETTERS, vol. 20, no. 12, 15 June 1995,
pages 1435-1437, XP000509291 BELL A S ET AL:
"EFFICIENT OPTICAL FREQUENCY-COMB
GENERATOR"**

## Description

The present invention relates to frequency comb generators and in particular, though not necessarily, to frequency comb generators operating in the optical frequency range to convert continuous wave light into light pulse trains.

A recent innovation in the field of optoelectronics is the optical frequency comb generator (OFCG) which is capable of generating a comb of equally spaced, discrete frequency modes from the continuous wave (cw) output of a laser source.

As described in M. Kourogi, K. Nakagawa and M. Ohtsu, IEEE J Quantum Electron., **29**, 2693, (1993) and L. R. Brothers, D. Lee and N. C. Wong, Optics Lett., **19**, 245, (1994), an OFCG comprises a laser source delivering a carrier frequency to an electro-optic modulator (EOM) located in an optical cavity that is resonant for both the carrier and the sidebands. The modulator is operated at a microwave frequency and the result is a comb of modes with an inter-mode spacing of exactly the microwave frequency. The amplitude of the modes decreases rapidly as the mode number increases. Hence, the number of modes one can detect is limited. Optical power can be transferred to high order sidebands by carefully selecting the characteristics of the cavity and the modulator but in doing so the total power in the comb decreases due to the fact that light transferred from the carrier to the sidebands reduces the coupling efficiency of the cavity to the light source.

Thus, with the known OFCGs a compromise has to be made between the width of the comb produced and the power in a particular mode.

One use of OFCGs lies in the field of optical frequency metrology where it is desired to measure the frequency of some unknown signal relative to a standard signal having a known frequency. Typically, a comb of modes is imposed onto the standard signal and the number of modes separating the standard frequency from the frequency of the unknown signal is counted.

The frequency differences which this technique can measure depends upon the number of detectable modes which can be generated by the OFCG. Any fall-off in mode power will reduce the range of the technique.

A second use of OFCGs is in the generation of high repetition rate pulse trains because a frequency comb is known to correspond to a pulse train in the time domain. However, the power of the pulse is related to the number of modes in the frequency domain and therefore a large number of modes is required to obtain a high peak power short pulse.

It is an object of the present invention to overcome or at least mitigate certain of the disadvantages of existing optical frequency comb generators.

In particular, it is an object of the present invention to increase the efficiency with which the output from a source of continuous wave light can be converted into a frequency comb thereby to increase the number of detectable modes.

It is also an object of the present invention to provide a source of high frequency pulses in the time domain, which source uses an efficient optical frequency comb generator.

According to a first aspect of the present invention there is provided apparatus for generating a comb of equally spaced electromagnetic modes, the apparatus comprising a source of electromagnetic radiation at a carrier frequency, a coupling cavity for receiving said electromagnetic radiation and a main cavity for receiving electromagnetic radiation from the coupling cavity, the main cavity containing modulation means for modulating the received electromagnetic radiation at a modulation frequency to produce a multiplicity of sidebands, wherein the main cavity is resonant at the carrier and sideband frequencies and the coupling cavity is essentially only resonant at said carrier frequency.

The coupling cavity is preferably arranged such that it is not resonant at any of the sideband frequencies, or alternatively is not resonant at most of the sideband frequencies. Accordingly, the coupling cavity increases the efficiency with which electromagnetic radiation is coupled from the source to the main cavity so that a substantially increased number of sidebands or modes than hitherto become detectable at the output of the main cavity. This may be achieved by designing the coupling cavity to have a very large free spectral range (FSR) relative to the main cavity, e.g. 1000 times that of the main cavity.

Whilst it is envisaged that the above apparatus could operate over any appropriate range of the electromagnetic spectrum (e.g. at microwave frequencies), the source is preferably a light source, for example a laser, and the coupling and main cavities are optical cavities. For example each cavity may comprise at least two optical mirrored surfaces.

In an embodiment of the above first aspect of the present invention the coupling cavity is provided by a dielectric plate, e.g. of glass with reflective coatings, where the cavity is formed between the two opposed faces of the plate and the source of electromagnetic radiation is tunable to provide the resonant requirements.

In a preferred embodiment of the above first aspect of the present invention, the coupling cavity comprises means for adjusting the cavity length for the purpose of tuning the resonant frequency of the cavity to the carrier frequency. For example, one mirror of the cavity may be mounted on a piezo-electric transducer to enable relative movement of the mirror with respect to the other mirror(s) of the cavity.

To enable the coupling cavity to remain in resonance the transducer of the coupling cavity mirror may be controlled by a sideband lock control loop which modulates the radiation input into the cavity with an RF frequency to produce a pair of sidebands. The loop comprises means for driving the piezo-electric mirror to cancel the amplitude of the beat between the sidebands and the aggregate of the carrier frequency reflected from the coupling cavity input mirror and the carrier frequency exiting from the coupling cavity through the input mirror.

It will be understood that the main optical cavity also incorporates a transducer-mounted mirror which may be controlled by a control loop which comprises means for mixing a portion of the detected output of the main cavity with a signal at the modulation frequency of the main cavity modulating means, and means for controlling the transducer to maintain the moveable mirror in a position at which a zero-crossing point, or other fixed point, of the demodulated signal occurs. The modulation means is preferably an electro-optic modulator, for example comprising a crystal of electro-optic material (e. g. lithium tantalate or lithium niobate) contained within a resonant microwave cavity although the modulation means may alternatively comprise an acoustooptic modulator.

Preferably, the coupling cavity comprises a pair of mirrored surfaces and the main cavity comprises three mirrored surfaces arranged in an astigmatically-compensated "dog-leg" geometry.

The main and coupling cavity may share a common mirrored surface which is fixed in position and provides an interface between the two cavities.

Preferably, light is transmitted from the light source to the coupling cavity through a Faraday isolator which is used to prevent feedback from the optical cavities to the light source.

According to a second aspect of the present invention there is provided a system for generating a high repetition rate pulse train, the system comprising apparatus for generating a comb of substantially equally spaced electromagnetic modes according to the above first aspect of the present invention.

For a better understanding of the present invention and in order to show how the same may be carried into effect reference will now be made, by way of example, to the accompanying drawings, in which:

Figure 1 shows a block diagram of a system for generating a high repetition rate pulse train;
Figure 2 shows an electro-optic modulator of the system of Figure 1;
Figures 3(a) shows a cavity length scan for a main cavity of the system of Figure 1;
Figure 3(b) shows the scan of Figure 3(a) demodulated at the frequency of an electro-optic modulator of the main cavity.
Figure 4 shows a typical frequency spectrum obtained for the output signal of the system of Figure 1; and
Figure 5 shows four different possible high repetition rate pulse train outputs from the system of Figure 1.

For an optical cavity which is resonant only at the carrier frequency and which has a light input surface and a light output surface, light exiting the cavity through the input surface is substantially equal in intensity, but opposite in phase, to the light entering the cavity through that surface. These two lignt beams cancel one another and the cavity appears to the light source to be substantially non-reflecting. However, when the cavity is designed to couple a large amount of power into the sideband modes, as is desirable to produce a comb having a large number of modes, the intensity of light exiting the cavity through the input surface is not sufficient to cancel the input light and the cavity appears very reflecting to the light source and the total power in the comb decreases.

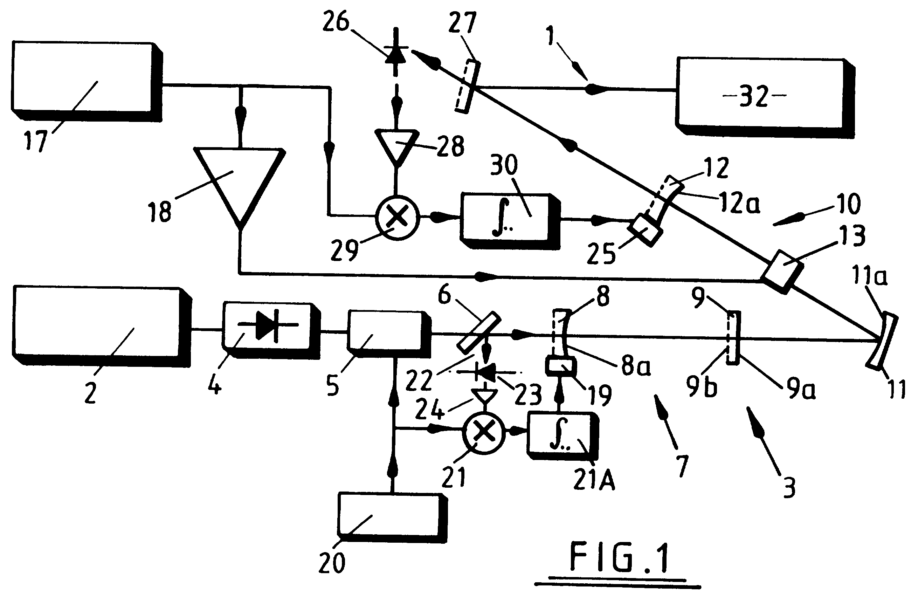

In order to overcome this problem the system of Figure 1 has been designed to provide a high repetition rate pulse train at an output indicated by reference numeral 1. The system comprises a Ti:sapphire laser light source 2 which provides a coherent output beam at a single wavelength of approximately 780nm and at a power of 190mW. The source 2 comprises a temperature stabilised Fabry-Perot cavity (not shown) to which the laser is locked so that the laser has a short term line-width of 5kHz with respect to the Fabry-Perot cavity.

The output from the laser 2 is fed into an optical frequency comb generator (OFCG) 3 primarily formed by a main optical cavity 10, through a Faraday isolator 4, an electro-optic modulator (EOM) 5 and a beam splitter 6 which are associated with a coupling cavity 7. The Faraday isolator 4 acts to prevent feedback from the OFCG to the Ti:sapphire laser whilst the EOM 5 and the beam splitter 6 form part of a control loop for the coupling cavity 7 which will be described hereinbelow.

The first or coupling cavity 7 is passive, i.e. contains no gain medium, and is arranged to receive the laser light from the modulator 5 and is formed by a first mirror 8, having a mirrored surface 8a with a radius of curvature of 200mm, and a second mirror 9 having a planar mirrored surface 9a. The substrate of the second mirror 9 is provided on its surface inside the coupling cavity with an anti-reflective (AR) coating 9b which is also disposed at an angle of 1 degree to the normal to the optical axis to avoid etalon effects. Both of the mirrored surfaces 8a and 9a have a reflectivity of 98.4%. Surface 8a is positioned to ensure that its curvature matches that of the input light beam to give mode matching of the beam to the cavity 7 and the free spectral range of the cavity 7 is tuned to 970 MHz.

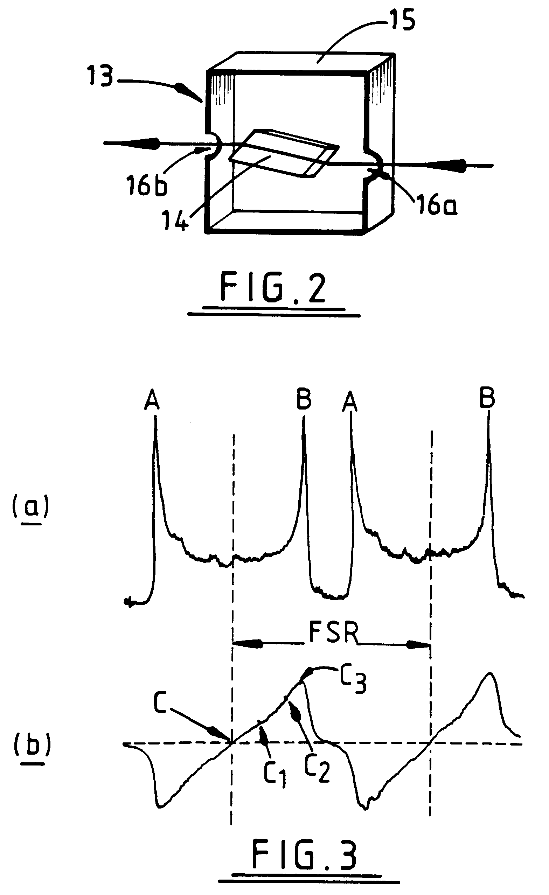

The second or main cavity 10 is formed by the planar mirrored surface 9a of the mirror 9, a second mirror 11 having a front mirrored surface 11a with a radius of curvature of 100mm and a reflectivity of 100%, and a third mirror 12 having a mirrored surface 12a with a radius of curvature of 100mm and a reflectivity of 98.4%. These three mirrored surfaces form an astigmatically-compensated "dog-leg" arrangement. Positioned in the optical path between the second and third mirrors 11,12 of the main cavity 10 is an electro-optic modulator (EOM) 13, shown in greater detail in Figure 2.

The EOM 13 comprises a generally rectangular, 1 x 1.5 x 10mm, lithium tantalate crystal 14 (Brewster cut for extraordinary polarised light) situated within a resonant microwave cavity 15. Further details of the construction of the EOM 13 are given in I. P. Kaminow and W. M. Sharpless, Appl Optics, **6**, 351, (1967). Light passing between the second and third mirrored surfaces 11<u>a</u>, 12<u>a</u> of the main cavity passes through cut-out windows 16<u>a</u>, 16<u>b</u> provided in opposed surfaces of the microwave cavity 15. The lithium tantalate crystal 14 is oriented with respect to the optical axis of the optical cavity 10 so that the light beam passes along the longitudinal axis of the crystal.

The microwave cavity 15 is coupled to a 2.7GHz microwave oscillator 17 via a microwave amplifier 18 and the microwave cavity 15 is designed to be resonant at this frequency. Microwave power coupled into the cavity causes a corresponding electric field to be generated across the crystal 14 which in turn modulates the refractive index characteristics of the crystal. The result of this is that the light passing through the crystal is similarly modulated.

At the resonant frequency of 2.7GHz, the EOM 13 has a modulation index of 1.2 for 1.4W of microwave power fed to the microwave cavity 15. The finesse F of the main optical cavity is typically limited to about 80 by virtue of a 2% loss in the EOM 13 . This loss is probably due to the intrinsic loss of the lithium tantalate crystal 14 at a wavelength of 780nm.

The length of the main cavity 10 is tuned to give a free spectral range (FSR) of 445MHz (where the FSR is the frequency between neighbouring resonant modes of the cavity and is inversely proportional to the length of the cavity) so as to match a selected (e.g. the sixth) subharmonic of the EOM frequency. The modulator 13 is located relative to the mirrored surface 12<u>a</u> such that the time taken for the main radiation beam to return to the modulator 13 is an integral multiple of the period of the modulation frequency provided by oscillator 17.

In order to maintain the optical path lengths of both the main and coupling cavity at the lengths required for resonance, both cavities are provided with a control loop arranged to control the axial position of a mirror of the corresponding cavity.

With regard firstly to the coupling cavity 7, the first mirror 8 thereof is mounted on a piezo-electric transducer 19 which is able to move the mirror 8 backwards and forwards along the optical axis. Prior to entering the coupling cavity, light exiting from the Faraday isolator 4 passes through the electro-optic phase modulator 5 which modulates the light with a 50MHZ sinusoidally varying signal, generated by an oscillator 20, to produce at least a pair of sidebands. The modulated light passes through the beam splitter 6 toward the coupling cavity 7. When the length of the coupling cavity is resonant substantially only for the carrier frequency, the sideband signals reflected from the cavity input surface 8a towards the beamsplitter 6 will be equal in intensity, but opposite in phase, thus the beats with the carrier cancel. However, if the cavity is off resonance, the exiting carrier will be phase shifted and the beats will not completely cancel. The resulting difference is detected by mixing at a double balanced mixer 21 the output of the oscillator 20 with the signal 22 reflected by the beam splitter 6 and detected by a photodetector 23 coupled to an amplifier 24. The difference is integrated at an integrator 21A to provide a dc control signal to the piezo-electric transducer 19. As a result the output of the coupling cavity 7 which is delivered to the main cavity 10 substantially consists solely of the single laser frequency, the 50MHz sidebands having been suppressed.

Correspondingly, the output mirror 12 of the main cavity 10 is mounted on a piezo-electric transducer 25 for movement along the optical axis. The effect of the electro-optic modulation in the main cavity 10 which is resonant at the optical carrier frequency and its sideband frequencies determined by the EOM 13 is to provide a high frequency sinusoidal sweep of the effective cavity length. Figure 3a shows the time average of this sweep when combined with a relatively slow cavity length sweep from which it can be seen that the sinusoidal sweep divides each resonant peak of the cavity (separated by the FSR) into two peaks A and B. The displacement of the peaks A and B from the centre frequency, as measured in relative cavity phase, is equivalent to the modulation index of the EOM.

Demodulating the signal of Figure 3a by mixing it with a signal at the 2.7MHz modulation frequency results in the signal shown in Figure 3b, the zero crossing point C of which occurs when the cavity is at a resonant length. In practice, this zero crossing point C is used as a locking point.

The control loop of the main cavity 10 comprises a photodetector 26 which receives light transmitted through a partially transparent fold mirror 27 (0.1% transmissive) in the output path 1. The signal generated by the photo-detector 26 is fed via an amplifier 28 to a double balanced mixer 29 which mixes the signal with the output from the 2.7MHz oscillator 17 used to drive the resonant microwave cavity 15. The output from the mixer 29 is integrated by an integrator 30 and the dc output of the integrator drives the piezo-electric transducer 25.

With the above described system up to 80% of the carrier was coupled through the cavity 7 into the main cavity 10. With both cavities locked to the carrier frequency a throughput of 16mW was measured, i.e. greater than 8% transmission. This is less than optimal mode matching but is still an order of magnitude greater than has been achieved hitherto without the coupling cavity 7. The system therefore provides a wide frequency comb combined with high power. The coupling cavity 7 ensures that almost all of the incident carrier light is coupled into the main cavity 10 without degrading the finesse of this cavity. The coincidence in frequency between modes of the coupling cavity 7 and the frequency comb can be minimised by altering the length of the coupling cavity 7.

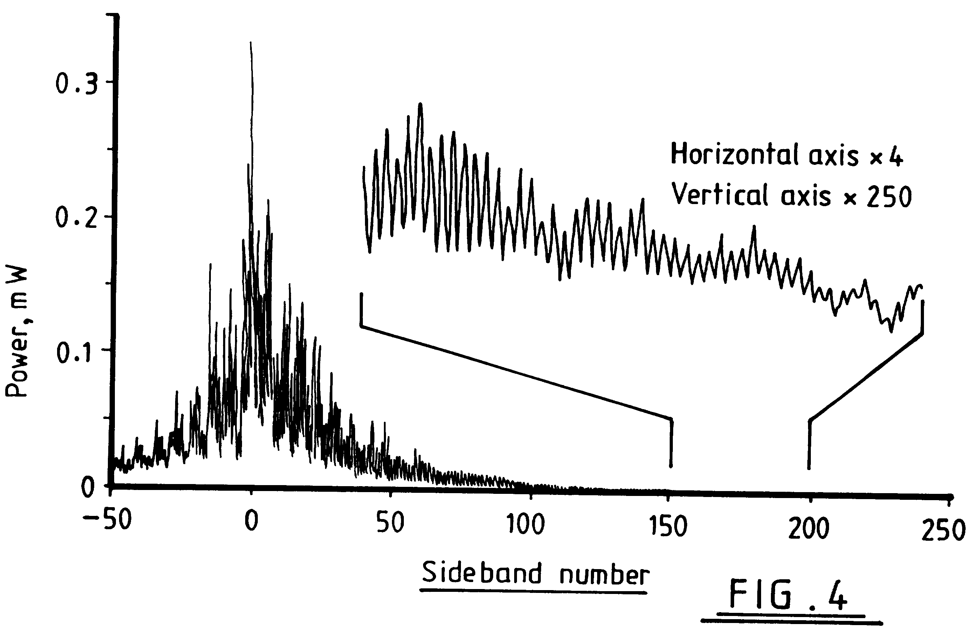

Figure 4 shows a part of the frequency spectrum of the output of the main coupling cavity 10 as determined by a spectrum analyser 32 (Figure 1) coupled to receive the cavity output (the inset shows an expanded portion of the comb). Only one side of the comb is shown in full. Modes are detectable to around the two hundredth order, with the optical power in the two hundredth mode being some tens of nanowatts. The detection limit is determined by the noise level due to background light and is somewhat less than tens of nanowatts.

The temporal output of the OFCG is given by the Fourier transform of the spectral output. When the main cavity length is locked to the true zero crossing point of the error signal (c in Fig. 3), the exponentially decaying power with respect to mode number leads to a lorentzian shaped pulse of width

$$\Delta\tau_p = \frac{\sqrt{\sqrt{2}-1}}{2f_m mF}$$

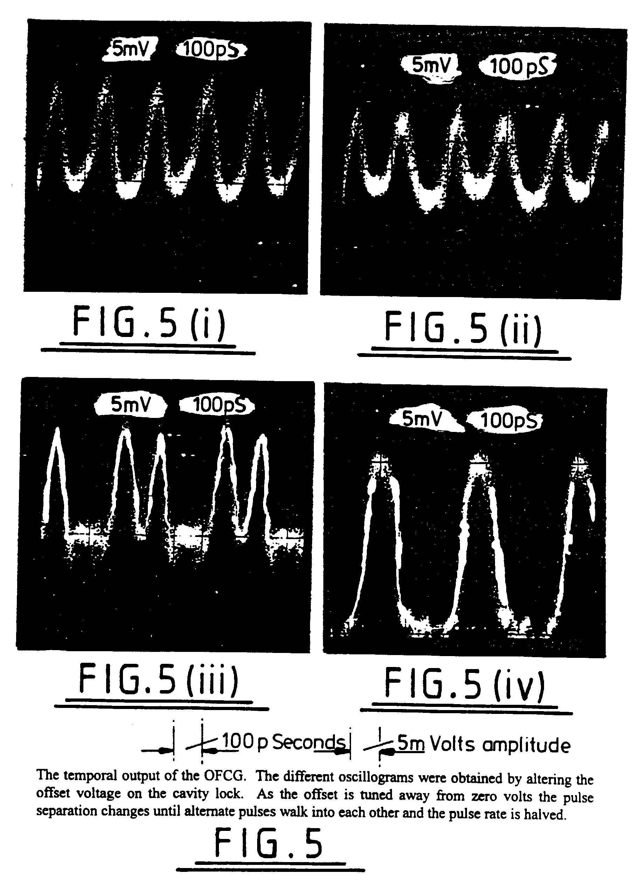

which is around 2 ps for the finesse and modulation index given above. The pulse repetition rate is then as shown in Fig. 5(i) and is twice the modulator frequency, 5.4GHz. In order to see why this should be so, one can think of the EOM sweeping the main cavity resonance frequency across the laser frequency twice per modulation period. Figure 5 shows the output pulse signal vs time for four different tunings of the cavity 10.

If the main cavity 10 length is tuned so that the modulator sweep is no longer symmetric around the laser frequency (for example if a dc offset is applied to the error signal so that locking occurs at $C_1$ or $C_2$ of Fig. 3) the pulses are no longer produced at equal time intervals as shown in Fig. 5(ii) or Fig. 5(iii). If the cavity length is tuned further until the laser frequency lies at the extremity of the EOM sweep, and is locked at $C_3$ in Fig. 3, only one, longer, pulse is produced per modulator period as shown in Fig. 5(iv).

The coupling cavity 7 provides an extra loss mechanism for the principal components of the OFCG. If a comb mode is resonant or close to resonant with a mode of the coupling cavity 7, then that mode will lose power out through the coupling cavity. When this match between comb frequency and coupling cavity mode frequency is very good, this loss can be seen as a sharp cut-off in the comb spectrum. One can ensure that there is not a good match by tuning the length of the coupling cavity to remove any sharp cut-off in the comb. It is preferred to have a coupling cavity 7 with a FSR greater than half the width of the frequency comb and a line width that is less than the mode separation in order to avoid such sharp cut-offs in the comb.

The light lost from the comb through use of the coupling cavity 7 counter-propagates with the input beam and appears in the rejected light from the Faraday isolator 4. The spectrum of this rejected light consists mainly of the carrier frequency along with a few discrete comb modes that have leaked through the coupling cavity 7 and if this were delivered to a high finesse cavity (not shown) tuned to the frequency of one of these leaked comb modes the carrier would be rejected. This may provide a method for extracting a single comb mode for use in a beat frequency measurement, and eliminating the background noise due to the total power in the comb. If the 98.4% reflecting output mirror 12a of the main cavity 10 is replaced with a high reflector the amount of comb light that can leak out through the coupling cavity 7 is maximised. In this manner, upwards of 30μW has been produced in a single comb mode at order number 53, with the nearest neighbouring mode over 30GHz away. This is enough light to provide injection locking of a laser diode and hence provide a phase-locked power oscillator at that comb mode frequency.

The system described above is therefore a source of high rate, short pulses with the potential for average power levels approaching that of the input laser. The pulse width is easily tunable by altering the rf power to the modulator.

It will be appreciated by the skilled person that various modifications may be made to the above described embodiment without departing from the scope of the invention. For example, the system could be arranged to operate at an optical carrier wavelength of 1.5μm in which case a suitable laser would be a diode laser or a fibre laser and the electro-optic modulator of the main cavity could comprise a lithium niobate crystal. The invention is also applicable to regions of the electromagnetic spectrum outside the optical spectrum. For example, the invention could be applied to generate a high repetition rate train of microwave pulses.

**Claims**

1. Apparatus for generating a comb of substantially equally spaced electromagnetic modes, the apparatus comprising a source (2) of electromagnetic radiation at a carrier frequency, a coupling cavity (7) for receiving said electromagnetic radiation and a main cavity (10) for receiving electromagnetic radiation from the coupling cavity, the main cavity containing modulation means (13) for modulating the received electromagnetic radiation at a modulation frequency to produce a multiplicity of sidebands, wherein the main cavity is resonant at the carrier and sideband frequencies and the coupling cavity is essentially only resonant at said carrier frequency.

2. Apparatus according to claim 1, wherein the source (2) is a light source and the coupling and main cavities are optical cavities.

3. Apparatus according to claim 1 or 2, wherein the coupling cavity (7) is provided by a dielectric plate and the cavity is formed between the two opposed faces of the plate.

4. Apparatus according to any one of the preceding claims, wherein the coupling cavity comprises means (19) for adjusting the cavity length for the purpose of tuning the resonant frequency of the cavity to the carrier frequency.

5. Apparatus according to claim 4, wherein said adjusting means comprises a piezo-electric transducer to which one of the coupling cavity mirrors is mounted, said transducer being controlled by a sideband lock control loop which modulates the radiation input into the cavity with an RF frequency to produce a pair of sidebands, the loop comprising means for driving the piezo-electric mirror (8) to equalise the sidebands input to the coupling cavity with the out of phase sidebands exiting from the coupling cavity through the input mirror.

6. Apparatus according to any one of the preceding claims, wherein the main optical cavity includes a transducer-mounted mirror (12,25) which is controlled by a control loop (26,28,29,30) which comprises means (29) for mixing a portion of the detected output of the main cavity with a signal at the modulation frequency of the main cavity modulating means, and means (30) for controlling the transducer to maintain the moveable mirror in a position at which a zero-crossing point, or other fixed point, of the demodulated signal occurs.

7. Apparatus according to any one of the preceding claims, wherein the modulation means (13) is an electro-optic modulator.

8. Apparatus according to any one of the preceding claims, wherein the coupling cavity (7) comprises a pair of mirrored surfaces (89,99) and the main cavity (10) comprises three mirrored surfaces (99,119,129) arranged in an astigmatically-compensated dog-leg geometry.

9. Apparatus according to any one of the preceding claims, wherein the main and coupling cavities share a common mirrored surface (99) which is fixed in position and provides an interface between the two cavities.

10. A system for generating a high repetition rate pulse train, the system comprising apparatus for generating a comb of substantially equally spaced electromagnetic modes according to any one of the preceding claims.

**Patentansprüche**

1. Vorrichtung zum Erzeugen eines Kammes aus im wesentlichen gleichmäßig beabstandeten elektromagnetischen Moden, wobei die Vorrichtung aufweist: eine Quelle (2) für elektromagnetische Strahlung bei einer Trägerfrequenz, eine Koppelkavität (7) zum Empfangen der elektromagnetischen Strahlung und eine Hauptkavität (10) zum Empfangen der elektromagnetischen Strahlung von der Koppelkavität, wobei die Hauptkavität eine Modulationseinrichtung (13) zum Modulieren der empfangenen elektromagnetischen Strahlung bei einer Modulationsfreuquenz zum Erzeugen einer Mehrzahl von Seitenbändern enthält, wobei die Hauptkavität bei der Träger- und den Seitenbandfrequenzen resonant ist und die Koppelkavität im wesentlichen nur bei der Trägerfrequenz resonant ist.

2. Vorrichtung nach Anspruch 1, wobei die Quelle (2) eine Lichtquelle ist, und die Koppel- und Hauptkavität optische Kavitäten sind.

3. Vorrichtung nach Anspruch 1 oder 2, wobei die Koppelkavität (7) durch eine dielektrische Platte gebildet ist und die Kavität zwischen den zwei gegenüberliegenden Flächen der Platte gebildet ist.

4. Vorrichtung nach einem der vorhergehenden Ansprüche, wobei die Koppelkavität eine Einrichtung (19) zum Einstellen der Kavitätslänge zum Zweck des Abstimmens der Resonanzfrequenz der Kavität auf die Trägerfrequenz aufweist.

5. Vorrichtung nach Anspruch 4, wobei die Einstelleinrichtung einen piezoelektrischen Wandler aufweist, an dem einer der Koppelkavitätsspiegel angebracht ist, wobei der Wandler durch eine Seitenband-Verriegelungssteuerschleife steuerbar ist, welche die Strahlungseingabe in die Kavität mit einer RF-Frequenz zur Erzeugung eines Paares von Seitenbändern moduliert, wobei die Schleife eine Einrichtung zum Ansteuern des piezoelektrischen Spiegels (8) zum Angleichen des Seitenbandeingangssignals in die Koppelkavität mit den außer Phase verlaufenden Seitenbändern, welche aus der Koppelkavität durch den Eingangsspiegel laufen, aufweist.

6. Vorrichtung nach einem der vorhergehenden Ansprüche, wobei die optische Hauptkavität einen mit einem Wandler versehenen Spiegel (12, 25) aufweist, welcher durch eine Steuerschleife (26, 28, 29, 30) steuerbar ist, die eine Einrichtung (29) zum Mischen eines Teils des erfaßten Ausgangssignals der Hauptkavität mit einem Signal bei der Modulationsfrequenz der Hauptkavitäts-Modulationseinrichtung sowie eine Einrichtung (30) zum Steuern des Wandlers zum Halten des beweglichen Spiegels in einer Position, an der ein Nulldurchlaufpunkt oder ein anderer fester Punkt des demodulierten Signals auftritt, aufweist.

7. Vorrichtung nach einem der vorhergehenden Ansprüche, wobei die Modulationseinrichtung (13) ein elektrooptischer Modulator ist.

8. Vorrichtung nach einem der vorhergehenden Ansprüche, wobei die Koppelkavität (7) ein Paar verspiegelter Oberflächen (8a, 9a) aufweist und die Hauptkavität (10) drei verspiegelte Oberflächen (9a, 11a, 12a) aufweist, die in einer astigmatisch kompensierten Hundebeingeometrie angeordnet sind.

9. Vorrichtung nach einem der vorhergehenden Ansprüche, wobei die Hauptund Koppelkavität sich eine gemeinsame verspiegelte Oberfläche (9a) teilen, welche in der Position fest ist und eine Grenzfläche zwischen den zwei Kavitäten bildet.

10. System zum Erzeugen einer Impulskette mit hoher Wiederholungsrate, wobei das System eine Vorrichtung zum Erzeugen eines Kamms von im wesentlichen gleichmäßig beabstandeten elektromagnetischen Moden gemäß einem der vorhergehenden Ansprüche aufweist.

## Revendications

1. Appareil pour générer un peigne à modes électromagnétiques sensiblement également espacés, l'appareil comprenant une source (2) de rayonnement électromagnétique à une fréquence de porteuse, une cavité de couplage (7) pour recevoir ledit rayonnement électromagnétique et une cavité principale (10) pour recevoir un rayonnement électromagnétique provenant de la cavité de couplage, la cavité principale contenant des moyens de modulation (13) pour moduler le rayonnement électromagnétique reçu à une fréquence de modulation afin de produire une multiplicité de bandes latérales, dans lequel la cavité principale est résonante aux fréquences de porteuse et de bande latérale et la cavité de couplage est résonante seulement essentiellement à ladite fréquence de porteuse.

2. Appareil selon la revendication 1, dans lequel la source (2) est une source de lumière et les cavités de couplage et principale sont des cavités optiques.

3. Appareil selon la revendication 1 ou 2, dans lequel la cavité de couplage (7) est constituée par une plaque diélectrique et la cavité est formée entre les deux faces opposées de la plaque.

4. Appareil selon l'une quelconque des revendications précédentes, dans lequel la cavité de couplage comprend des moyens (19) pour régler la longueur de cavité dans le but d'accorder la fréquence de résonance de la cavité à la fréquence de porteuse.

5. Appareil selon la revendication 4, dans lequel lesdits moyens de réglage comprennent un transducteur piézo-électrique sur lequel l'un des miroirs de cavité de couplage est monté, ledit transducteur étant commandé par une boucle de commande de verrouillage de bande latérale qui module le rayonnement entré dans la cavité avec une fréquence RF afin de produire deux bandes latérales, la boucle comprenant des moyens pour commander le miroir piézo-électrique (8) afin de rendre égales les bandes latérales entrées sur la cavité de couplage et les bandes latérales déphasées sortant depuis la cavité de couplage au travers du miroir d'entrée.

6. Appareil selon l'une quelconque des revendications précédentes, dans lequel la cavité optique principale inclut un miroir monté sur transducteur (12, 25) qui est commandé par une boucle de commande (26, 28, 29, 30) qui comprend des moyens (29) pour mélanger une partie de la sortie détectée de la cavité principale avec un signal à la fréquence de modulation des moyens de modulation de cavité principale, et des moyens (30) pour commander le transducteur afin de maintenir le miroir mobile dans une position dans laquelle un point de passage par zéro ou tout autre point fixé du signal démodulé survient.

7. Appareil selon l'une quelconque des revendications précédentes, dans lequel les moyens de modulation (13) sont un modulateur électro-optique.

8. Appareil selon l'une quelconque des revendications précédentes, dans lequel la cavité de couplage (7) comprend deux surfaces en miroir (8a, 9a) et la cavité principale (10) comprend trois surfaces en miroir (9a, 11a, 12a) agencées selon une géométrie en coude compensée astigmatiquement.

9. Appareil selon l'une quelconque des revendications précédentes, dans lequel les cavités principale et de couplage partagent une surface en miroir commune (9a) qui est fixe en position et qui constitue une interface entre les deux cavités.

10. Système pour générer un train d'impulsions à fréquence de répétition élevée, le système comprenant un appareil pour générer un peigne à modes électromagnétiques espacés sensiblement également selon l'une quelconque des revendications précédentes.

FIG.1

FIG. 2

(a)

FSR

(b)

FIG. 3

Horizontal axis × 4
Vertical axis × 250

FIG . 4

Sideband number

Power, mW

FIG.5 (i)

FIG.5 (ii)

FIG.5 (iii)

FIG.5 (iv)

100 p Seconds | 5m Volts amplitude

The temporal output of the OFCG. The different oscillograms were obtained by altering the offset voltage on the cavity lock. As the offset is tuned away from zero volts the pulse separation changes until alternate pulses walk into each other and the pulse rate is halved.

FIG.5